# EUROPEAN PATENT APPLICATION

(11) **EP 3 300 158 A1**
(43) Date of publication of application: **28.03.2018**
(21) Application number: 16190729.0
(22) Date of filing: 27.09.2016
(51) Int. Cl.: H01M 10/42, H01M 2/34, H01M 2/16, H01M 4/13

(54) **ELECTRICAL ENERGY STORAGE UNIT WITH A COMPONENT COMPRISING A SHAPE MEMORY MATERIAL AND CORRESPONDING ELECTRICAL AND ENERGY STORAGE SYSTEM**

(71) Applicant: Lithium Energy and Power GmbH & Co. KG, 70469 Stuttgart (DE)
(72) Inventor: Kaspar, Jan, 70806 Kornwestheim (DE)
(74) Representative: Bee, Joachim

(57) **Abstract**

Electrical energy storage unit (1), comprising at least one electrode assembly (2) with an anode (10), a cathode (12) and a separator (11) as well as at least one component (15) comprising at least one first shape memory material, where the at least one component (15) comprising the at least one first shape memory material deforms in such a way when exceeding a first temperature that a short circuit of the anode (10) and the cathode (12) is formed through the separator (11).

## Description

The present invention emanates from an electrical energy storage unit, an electrical energy storage system and the use of an electrical energy storage unit according to the preamble of the independent claims.

### State of the art

The development and use of energy storage technologies comprising ever increasing energy and power densities necessitates sophisticated measures to guarantee a certain level of safety. Especially in the automotive sector, safety requirements are high in order to cover the diverse sources of possible malfunctioning, for example accidents involving one or multiple vehicles.

Document EP 0 700 109 A1 describes a secondary battery wherein a shape memory material is arranged in order to generate a sufficient compression force to allow high power charging and discharging.

Document EP 0 862 231 A1 describes a lithium secondary battery which has a thermal switch to connect a cathode and an anode outside the active material layer electrically.

### Disclosure of invention

### Advantages of the invention

According to the present invention, an electrical energy storage unit, an electrical energy storage system and the use of an electrical energy storage unit with the characteristic features of the independent claims are provided.

The electrical energy storage unit comprises at least one electrode assembly with an anode, a cathode and a separator as well as at least one component comprising at least one first shape memory material, characterized in that the at least one component comprising the at least one first shape memory material deforms in such a way when exceeding a first temperature that a short circuit of the anode and the cathode is formed through the separator. This is advantageous as a direct short circuit through the separator enables a uniform short circuit current distribution within the electrical energy storage unit, which in turn generates a more homogenous temperature distribution throughout the electrode assembly. Thus, a fast discharge of the electrical energy storage unit in case of need, for example to prevent a thermal runaway, is made possible.

Further illustrative embodiments of the present invention are given in the dependent claims.

In a further embodiment, the component comprising the at least one first shape memory material is located between layers of the separator and/or is located adjacent to an anode layer and/or adjacent to a cathode layer. This simplifies the generation of the short circuit through the separator as the component can, for example, easily pierce through the separator when exceeding the first temperature.

In a further embodiment, the component is embedded in the anode layer and/or in the cathode layer. This simplifies the generation of the short circuit through the separator as the component can, for example, easily pierce through the separator when exceeding the first temperature. Furthermore, a manufacturing process of the electrical energy storage unit only has to be modestly adapted because the joining process of the different layers, usually realized as foils, is not affected but only a manufacturing process of the anode layer and/or cathode layer.

In a further embodiment, first segments of the component deform in opposite directions when exceeding the first temperature. Thus, the separator is pierced in a reliable manner and the applied force is effectively doubled.

In a further embodiment, the first shape memory material is electrically conductive. This improves the short circuit through the separator and effectively allows higher short circuit currents which in turn allows to discharge the electrical energy storage unit faster. Current flow is not only possible via holes in the separator but also via the hole-creating component.

In a further embodiment, at least one second segment of the component comprises a second shape memory material. This allows to cover more temperature ranges and shapes which offers additional flexibility. The process of creating a short circuit can be adjusted in a flexible manner to different temperature ranges. When exceeding the first temperature, for example, a short circuit is created which allows the electrical energy storage unit to slowly discharge with a small discharge current. When subsequently a second temperature is exceed, the second segment deforms as well so as to extend the short circuit and increase the discharge current. Thus, a finer grading of the desired short circuit can be obtained.

In a further embodiment, the component is star-shaped. This form is particularly suited to pierce the separator by means of its spike-like vertexes. Furthermore, an internal resistance of the electrical energy storage unit is only increased as little as possible.

In a further embodiment, the first temperature is lower than the glass transition temperature of the separator. Thus, the component is able to deform and generate a controlled short circuit through the separator before the separator decomposes. Subsequently, the hazardous potential of the electrical energy storage unit is substantially lowered.

In a further embodiment, the component exhibits a symmetry. This favours a more uniform short circuit current distribution in case the separator is pierced by the component. Furthermore, in the manufacturing process of the electrical energy storage unit, less care has to be given to properly install the symmetric component in the electrode assembly.

Advantageously, the electrical energy storage unit is an electrochemical battery cell. For example, the electrical energy storage unit can be a lithium based battery cell, in particular a lithium ion battery cell. Furthermore, the battery cell can be a lithium polymer cell, a nickel metal hydride cell, a lithium air cell, a lithium sulfur cell or a lithium ion based solid state cell.

In a further embodiment, the component is arranged in the center of the electrode assembly. This is advantageous in case of a controlled short circuit as generated heat is spread more uniformly within the electrode assembly. Furthermore, the risk of an undesired contact of the component with the surroundings, e.g. when the component accidentally protrudes from the electrode assembly, is reduced.

Furthermore, an electrical energy storage system, which comprises an electronic control unit and at least one electrical energy storage unit according to the invention, is provided. This provides the systemic advantage that the electrical energy storage unit according to the invention can be installed in particularly safety critical places of an electrical energy storage system, where the risk of overheating and in consequence thermal runaway is increased. This is for example the case when the electrical energy storage unit according to the invention is surrounded by conventional electrical energy storage units. In such a configuration, the electrical energy storage unit in the centre is particularly prone to overheating. With the installation of the electrical energy storage unit according to the invention, safety on a system level is increased.

Furthermore, the use of an electrical energy storage unit according to the invention in electrically propelled vehicles including hybrid vehicles and stationary electrical energy storage plants as well as in electrically operated hand tools is disclosed. This is advantageous in addition to the advantages mentioned above, because electrically operated hand tools do not normally possess active cooling installations for integrated electrical energy storage units and are thus particularly prone to overheating and thermal runaway. These risks can be minimized by using the electrical energy storage unit according to the invention.

### Description of the figures

Advantageous embodiments of the invention are given in the figures and described in detail in the description below.
Figure 1 shows a schematic view of a cross section of an electrode assembly of a first embodiment of the electrical energy storage unit according to the invention.
Figure 2 shows a schematic view of the cross section of the electrode assembly of the first embodiment of the electrical energy storage unit according to the invention in a deformed state of the component.
Figure 3 shows a schematic view of a cross section of the electrode assembly of a second embodiment of the electrical energy storage unit according to the invention.
Figure 4 shows a schematic view of a profile of the at least one component of the second embodiment of the electrical energy storage unit according to the invention.
Figure 5 shows a schematic view of a cross section of the electrode assembly of a third embodiment of the electrical energy storage unit according to the invention.
Figure 6 shows a schematic view of a cross section of the electrode assembly of a fourth embodiment of the electrical energy storage unit according to the invention.
Figure 7 shows a schematic view of a cross section of the electrode assembly of a fifth embodiment of the electrical energy storage unit according to the invention.

### Embodiments of the invention

### Identical reference signs refer to identical features in all figures.

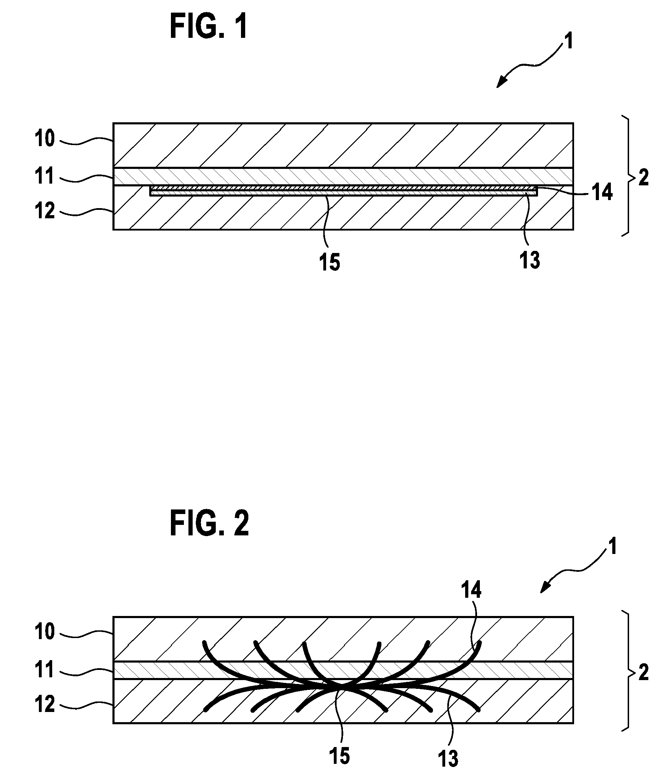

Figure 1 shows a schematic view of a cross section of an electrode assembly 2 of a first embodiment of the electrical energy storage unit 1 according to the invention. The electrode assembly 2 exhibits an anode layer 10, a separator layer 11 and a cathode layer 12. A component 15 comprises a first segment 13 and a second segment 14. The first segment 13 comprises a first shape memory material and the second segment 14 comprises a second shape memory material. The component 15 is embedded into the cathode layer 12. The component 15 adjoins the separator layer 11. The first segment 13 and the second segment 14 preferably have the same dimensions. Alternatively, the first segment 13 and the second segment 14 can be of the same material, for example the first shape memory material, and have differing dimensions.

Figure 2 shows a schematic view of the cross section of the electrode assembly 2 of the first embodiment of the electrical energy storage unit 1 according to the invention in a deformed state of the component 15. When exceeding or after having exceeded a first temperature, the first segment 13 and the second segment 14 of the component 15 deform and pierce the separator layer 11, thereby generating a short circuit of the anode layer 10 and the cathode layer 12 through the separator layer 11. The two segments 13, 14 deform in opposite directions when exceeding the first temperature.

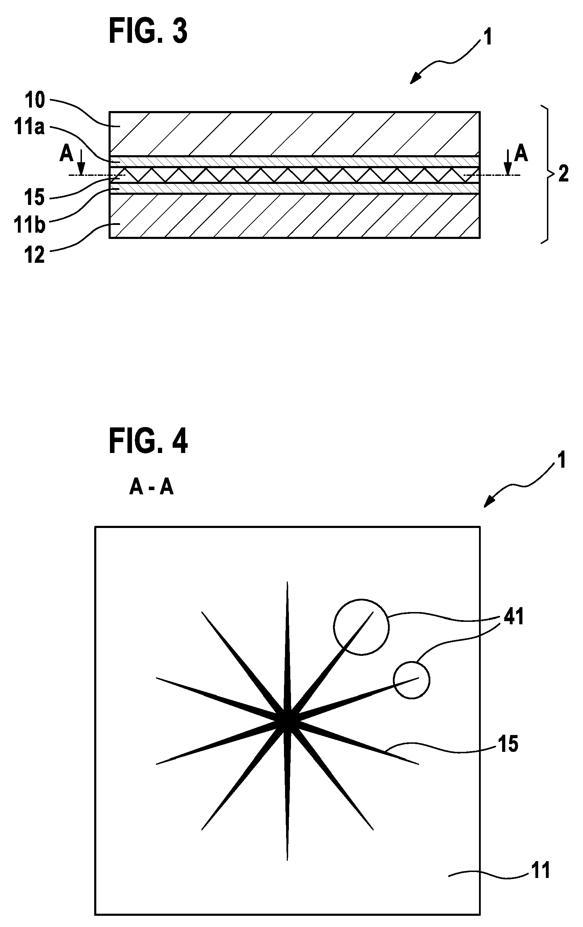

Figure 3 shows a schematic view of a cross section of the electrode assembly 2 of a second embodiment of the electrical energy storage unit 1 according to the invention. The component 15 comprising the at least one first shape memory material is located between a first separator layer 11a and a second separator layer 11b. When the component 15 is designed in such a way that segments of the component 15 deform in opposite directions when exceeding the first temperature, the applied force onto the separator layers 11a, 11b is effectively increased as each segment only has to pierce through one of the separator layers 11a, 11b.

Figure 4 shows a schematic view of a profile of the at least one component 15 of the second embodiment of the electrical energy storage unit 1 according to the invention. The orientation of the profile is given in figure 3 with the label A. The component 15 has a star-shaped form and has spike-like vertices 41. The spike-like vertices 41 facilitate the piercing of the separator layers 11a, 11b. The star-shape form only interferes mildly with the movement of charge carriers within the electrical energy storage unit 1.

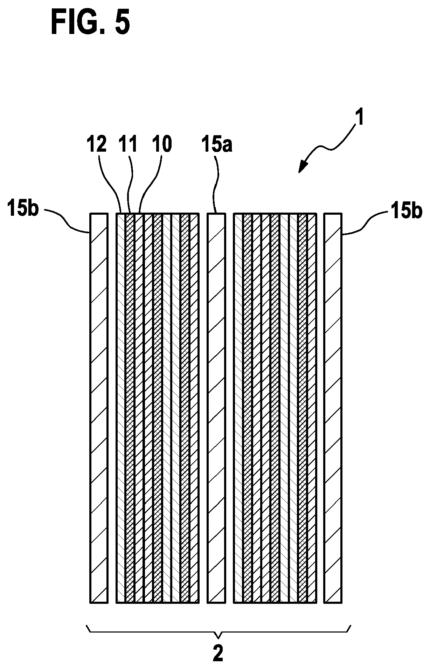

Figure 5 shows a schematic view of a cross section of the electrode assembly 2 of a third embodiment of the electrical energy storage unit 1 according to the invention. The electrode assembly 2 is similar to a jelly roll, which is for example used in prismatic or cylindrical battery cells. A first component 15a comprising a first shape memory material is installed in the center of the electrode assembly 2. A second component 15b comprising a second shape memory material is installed on the lateral surface of the electrode assembly 2. When exceeding a first temperature, the first component 15a and the second component 15b deform in such a way so as to form a short circuit of the anode 10 and the cathode 12 through the separator. Preferably, the second component 15b deforms towards the center, i.e. towards the component 15a, and the component 15a deforms in a way similar to that shown in figure 2, i.e. to the left and to the right in this figure's view.

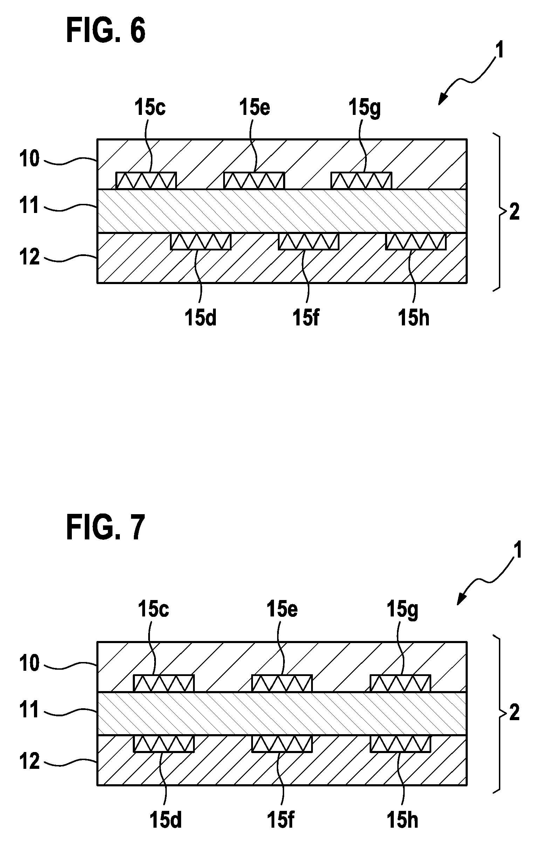

Figure 6 shows a schematic view of a cross section of the electrode assembly 2 of a fourth embodiment of the electrical energy storage unit 1 according to the invention. The electrode assembly 2 comprises several components 15c, 15d, 15e, 15f, 15g, 15h which comprise a first shape memory material. The components 15c, 15e, 15g are embedded into the anode layer 10 and are distributed uniformly. The components 15d, 15f, 15h are embedded into the cathode layer 12 and are also distributed uniformly. It is also possible to distribute the components 15c to 15h in a non-uniform manner, e.g. to spare out a center part of the electrode assembly 2 where the temperature increase is usually the highest and thus avoid additional temperature increase due to increased resistance. The components 15c, 15e, 15g are arranged in a staggered way relative to the components 15d, 15f, 15h which, depending on the actual profile of the components 15c to 15 h, may improve the flow of ions thereby minimizing losses due to increased electrical resistance.

Figure 7 shows a schematic view of a cross section of the electrode assembly 2 of a fifth embodiment of the electrical energy storage unit 1 according to the invention. The components 15c, 15e, 15g in the anode are arranged in a congruent manner with the components 15d, 15f, 15h in the cathode. This may improve the flow of ions thereby minimizing losses due to increased electrical resistance. When exceeding or after having exceeded the first temperature, the components 15c, 15e, 15g deform in the direction of the components 15d, 15f, 15h and vice versa, thereby creating a short circuit through the separator.

## Claims

1. Electrical energy storage unit (1), comprising at least one electrode assembly (2) with an anode (10), a cathode (12) and a separator (11) as well as at least one component (15, 15a, 15b) comprising at least one first shape memory material, **characterized in that** the at least one component (15, 15a, 15b) comprising the at least one first shape memory material deforms in such a way when exceeding a first temperature that a short circuit of the anode (10) and the cathode (12) is formed through the separator (11, 11a, 11b).

2. Electrical energy storage unit (1) according to claim 1, **characterized in that** the component (15, 15a, 15b) is located between layers of the separator (11, 11a, 11b) and/or is located adjacent to an anode layer (10) and/or adjacent to a cathode layer (12).

3. Electrical energy storage unit (1) according to one of the preceding claims, **characterized in that** the component (15, 15a, 15b) is embedded in the anode layer (10) and/or in the cathode layer (12).

4. Electrical energy storage unit (1) according to one of the preceding claims, **characterized in that** first segments (13) of the component (15) deform in opposite directions when exceeding the first temperature.

5. Electrical energy storage unit (1) according to one of the preceding claims, **characterized in that** the first shape memory material is electrically conductive.

6. Electrical energy storage unit (1) according to one of the preceding claims, **characterized in that** at least one second segment (14) of the component comprises a second shape memory material.

7. Electrical energy storage unit (1) according to one of the preceding claims, **characterized in that** the component (15, 15a, 15b) is star-shaped.

8. Electrical energy storage (1) unit according to one of the preceding claims, **characterized in that** the first temperature is lower than the glass transition temperature of the separator (11, 11a, 11b).

9. Electrical energy storage unit (1) according to one of the preceding claims, **characterized in that** the component (15, 15a, 15b) exhibits a symmetry.

10. Electrical energy storage unit (1) according to one of the preceding claims, **characterized in that** the component (15, 15a, 15b) is arranged in the center of the electrode assembly (2).

11. Electrical energy storage system, comprising an electronic control unit and at least one electrical energy storage unit (1) according to one of the preceding claims.

12. Use of an electrical energy storage unit (1) according to one of the claims 1 to 10 in electrically propelled vehicles including hybrid vehicles and stationary electrical energy storage plants as well as in electrically operated hand tools.
